Europäisches Patentamt

**European Patent Office**

**Office européen des brevets**

(11) Publication number: **0 300 795**
**A1**

(12) **EUROPEAN PATENT APPLICATION**

(21) Application number: **88306715.9**

(22) Date of filing: **21.07.88**

(51) Int. Cl.⁴: **F 16 L 41/04**
**G 01 M 3/02**

(30) Priority: **22.07.87 GB 8717336**
**25.02.88 GB 8804406**

(43) Date of publication of application:
**25.01.89 Bulletin 89/04**

(84) Designated Contracting States:
**AT BE CH DE ES FR GB GR IT LI LU NL SE**

(71) Applicant: **Du Pont (UK) Limited**
**Hilcote Plant P.O. Box 1**
**Nr. Alfreton Derbyshire DE55 5JD (GB)**

(72) Inventor: **Stenner, Nigel Wayne**
**Milford Lea 4 Aston Lane**
**Shardlow Derbyshire DE7 26X (GB)**

(74) Representative: **Jones, Alan John et al**
**CARPMAELS & RANSFORD 43 Bloomsbury Square**
**London, WC1A 2RA (GB)**

(54) **Adaptor for pressure testing.**

㊙ The invention relates to the pressure testing of pipes or other apparatus connected by a service tee to a main supply pipe.

The adaptor (19) is attached to a tapping tee (10) by use of a hexagonal bolt head (22) which enters a hexagonal socket (13′) in the neck (13) of a cutter (14).

The adaptor body (19) is then rotated and the trapped bolt head (22) causes the bolt (21) to be screwed up into the internal threaded bore (20) of the body (19) of the adaptor. This in turn compresses the resilient washer (23) and causes it to expand radially outwardly thus gripping the internal surface of the cutter carrier (13).

Once this resilient washer (23) is tight, continued rotation of the body will cause the cutter carrier (13) to rotate in the screw thread (12) and therefore to move axially downwardly bringing seal (24) into close contact with the end face of neck (13).

The adaptor is now fully sealed to the tee (10) and the pressure test kit (36) can be attached to apply pressure through the adaptor, through the neck of the tee and then through the pipe 16 to test the pressure tightness of the joints and apparatus attached to the tee.

Once the pressure tightness has been checked the pressure test kit and adaptor can be removed and the hole cut in the main (15) using the cutter (14) in the conventional way.

Fig. 1

**Description**

## ADAPTOR FOR PRESSURE TESTING

This invention relates to the pressure testing of pipes or other apparatus connected by a service tee to a main supply pipe.

The term "a service tee" could include tapping tees, punch tees or any device which is designed to be attached to a main supply pipe such as a gas main, to enable gas to be supplied to a user e.g. to a house containing gas appliances.

Before the main is breached it is necessary to test the gas-tightness of the piping leading from the main to the meter tap in the user's premises and to do this it is necessary to attach a pressure test kit to the upper end of the neck of the service tee.

This is normally done by use of a test cap which is screwed onto the external thread of the upper end of the neck of the service tee.

Unfortunately service tees are marketed in a number of varieties using different caps having different thread forms, diameters, pitch differences etc. depending largely on the manufacturing company. This means that the gas engineer has to carry many different types of test cap.

An object of the present invention is to provide an adaptor to enable a common pressure test kit to be used with many different kinds of service tees.

To enable an adaptor to be used, advantage is taken of the fact that the female hexagon at the top end of the cutter or stopper is of standard size in many different service tees. This is normally a 12 mm female hexagon and although the depth may vary and some hexagons have undercuts, the present invention seeks to take advantage of the common internal size of the hexagon to enable an adaptor to be attached and sealed to the service tee.

Thus in accordance with the present invention, an adaptor for connecting a pressure testing device to a service tee comprises a gripping means adapted to fit into a socket in a cutter or stopper in the tee neck, the gripping means on the adaptor being adapted to be diametrically expandable so as to grip the socket internally to enable the adaptor to be moved axially in conjunction with and in response to movement of the cutter or stopper axially, the axial movement of the cutter itself being induced by rotation of the adaptor, and a seal on the adaptor adapted to be moved axially into contact with and to seal the end face of the tee neck, the seal being adapted to be brought into close contact with the end face of the tee by the axial movement of the adaptor and cutter or stopper, and means on the adaptor to receive a pressure test kit fitting.

Preferably the gripping means comprises a split sleeve, or collet, and an internal cone nut which can be drawn or pushed in to the split sleeve by some means, which may be a thread or toggle clamp or cam arrangement, so that as the cone nut enters the split sleeve the split portions of the sleeve expand to grip the cutter carrier internally.

In accordance with another aspect of the present invention, an adaptor for connecting a pressure testing device to a tapping tee comprises a male hexagon nut adapted to fit into a corresponding hexagonal socket in a cutter carrier in the tee neck, a resilient washer on the adaptor adapted to be diametrically expandable so as to grip the cutter carrier internally to enable the adaptor to be moved axially in conjunction with and in response to movement of the cutter carrier axially, the axial movement of the carrier itself being induced by rotation of the adaptor, and a seal on the adaptor adapted to be moved axially into contact with and to seal the end face of the tee neck, and means on the adaptor to receive a pressure test kit fitting, the seal being adapted to be brought into close contact with the end face of the tee by the axial movement of the adaptor and cutter carrier.

Alternatively said male hexagon nut may be carried on a threaded extension which passes through the body of the adaptor, and is axially movable by rotation of a captive nut so that the washer is caused to grip the cutter carrier by rotating the captive nut to move the threaded extension axially, and thus compress the resilient washer, which again may be located around the threaded extension.

The seal may comprise an annular resilient washer adapted to contact and seal against the end face of the neck of the the tapping fee, the seal being effected again by rotation of the body of the adaptor thus rotating and moving the cutter carrier axially after the resilient washer has been compressed to grip the cutter carrier.

In the accompanying drawings:-

Figure 1 is an elevation partly in section of an adaptor embodying the invention fitted onto a tapping tee;

Figure 2 is an isometric exploded view of the adaptor of Figure 1;

Figure 3 is a section through an alternative form of adaptor embodying the invention;

Figure 4 is an elevation partly in section of an adaptor embodying the invention fitted onto a tapping tee of which only a portion is shown;

Figure 5 is a section on line 2-2 of Figure 4.

Figures 6 and 7 are sections through different arrangements of collets, and

Figure 8 is an elevation partly in section of an alternative form of adaptor embodying the present invention.

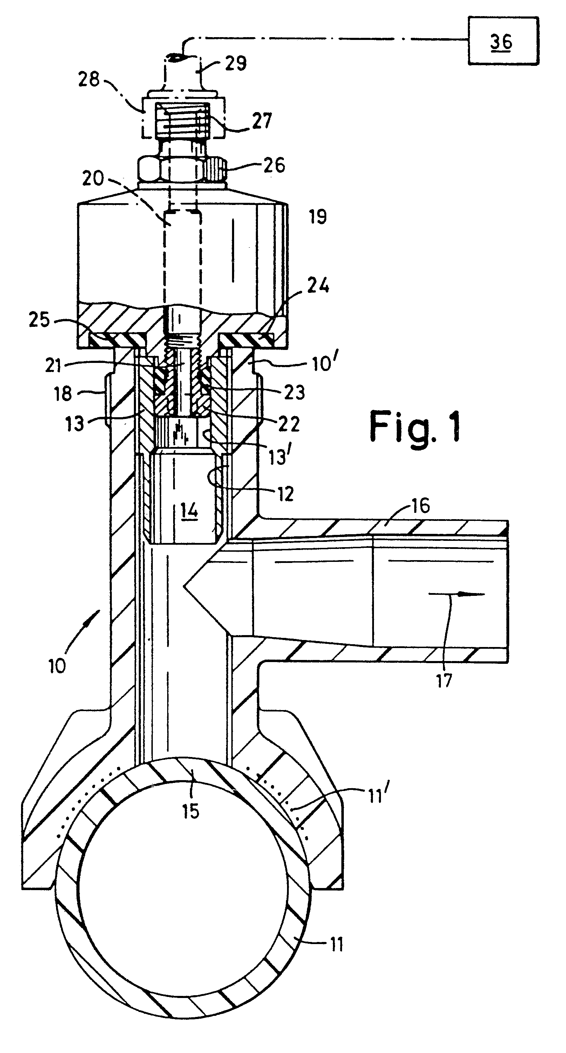

The tapping tee 10 shown in Figure 1 is attached to a gas main 11 by being "electro-fused". Both the tapping tee 10 and the gas main 11' are of plastics material and a heater wire 11 in the tapping tee is heated, in a well known manner to effect the welding or fusing of the tee to the main.

The tapping tee has a neck portion 10' with an internal thread 12 into which is screwed a carrier 13 for a cutter 14. The carrier 13 is formed at its upper end as a female hexagon 13'. This cutter is used, in due course to cut a hole at 15 in the main 11.

The tapping tee 10 also has a branch 16 by which fluid (such as natural gas) flowing through the main 11 is supplied in the direction of the arrows 17 to an installation such as a domestic gas installation.

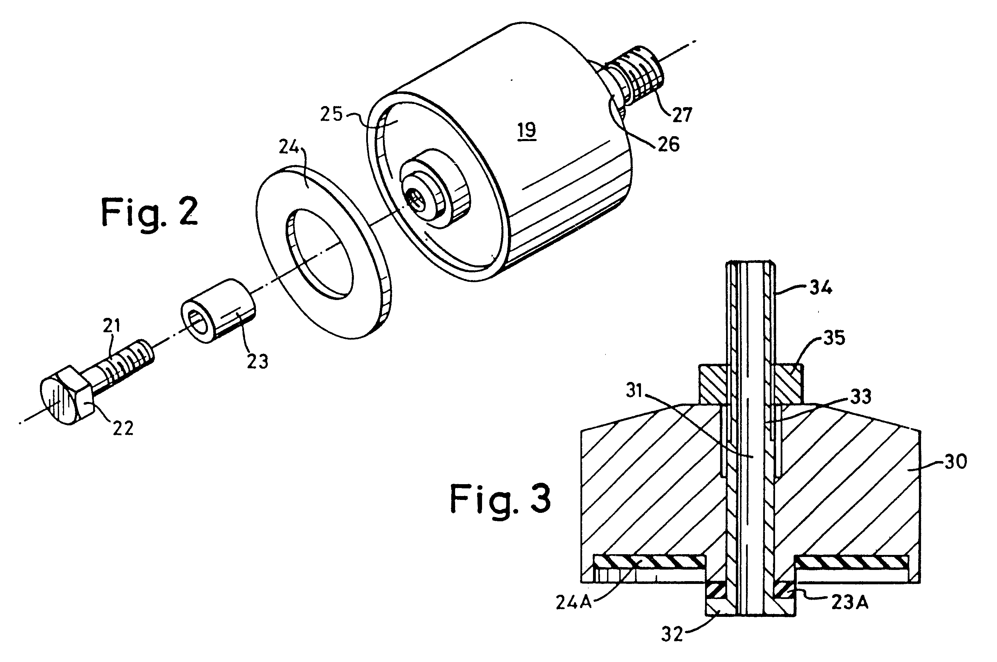

The adaptor for enabling a pressure test kit to be attached to the neck of the tapping tee is also shown in Figure 1 and, in exploded form, in Figure 2.

The adaptor consists of a round body 19 which may be made of plastic or metal and which has a bore 20 extending axially through it.

A hexagon bolt 21 is screwed into a thread in the lower end of the bore 20 and the bolt head 22 acts as the male hexagon referred to above. Between the body 19 and the head of the bolt 22 is a resilient washer 23. A flat annular sealing washer 24 is trapped in a recess 25 in the lower surface of the body 19.

At the top end of body 19 is a fixed hexagon nut 26 by which the body may be rotated and this extends into a standard quarter inch bsp adaptor 27 to receive a nut 28 for attaching a pipe 29 leading to a pressure test kit 36.

Figure 2 shows the components of the adaptor in exploded view from which it will be noted that the resilient washer 23 is of cylindrical form and the seal 24 is a flat annular washer.

In use when the tee has been electro-fused to the gas main the adaptor is placed so that the bolt head 22 enters the female hexagon 13' in the cutter.

The body 19 is then rotated and the trapped bolt head 22 causes the bolt to be screwed up into the internal threaded bore 20 of the body 19 of the adaptor. This in turn compresses the resilient washer 23 and causes it to expand radially outwardly thus gripping the internal surface of the cutter carrier 13.

Once this resilient washer 23 is tight, continued rotation of the body will cause the cutter carrier 13 to rotate in the screw thread 12 and therefore to move axially downwardly thereby pulling the adaptor downwardly due to the right gripping contact between seal 23 and the cutter carrier 13. This axial movement brings seal 24 into close contact with the end face of neck 13.

The adaptor is now fully sealed to the tee and the pressure test kit (36) can be attached as shown in Figure 1 so as to apply pressure through the adaptor, through the neck of the tee and then through the pipe 16 to test the pressure tightness of the joints and apparatus attached to the tee.

Once the pressure tightness has been checked the pressure test kit and adaptor can be removed and the hole cut in the main 15 using the cutter 14 in the conventional way.

In Figure 3 is shown an alternative form of adaptor 30, the body of which has an axial bore 31. The male hexagon is again in the form of a bolt head 32 but the bolt has an extended shank 33, screw threaded at 34, and engaged in a nut 35. Nut 35 is rotatable but is prevented from moving axially downward by the adaptor body 30.

The washer 23A and washer 24A are similar to those shown in Figure 1.

In use of this form of the adaptor the nut 35 is rotated so as to cause the shank 33 of the bolt to move axially upwardly thus expending the washer 23A to cause it to grip the cutter body. This can be effected without any danger of rotating the cutter carrier prematurely. When this washer 23A is tight, rotation of the body 30 will cause the washer 24A to make sealing contact onto the upper surface of the neck of the tee. Apart from these changes in construction the remainder of the adaptor is similar to and is used in the same way as the adaptor described with reference to Figures 1 and 2.

The adaptor and the various nuts, bolts, etc. can be made in metal or plastic.

The embodiment of the invention shown in Figure 3 has advantages over the embodiment shown in Figures 1 and 2.

In the first embodiment of the invention the cutter could be moved sufficiently far axially, prior to establishment of a good "grip" contact between the adaptor body and the cutter carrier so that there is virtually no contact left between the cutter carrier and the "washer" 23 thereby precluding establishment of any such contact i.e. any rotation of the adaptor body could, if the fit of the cutter carrier in the neck of the tee is loose, simply serve to move the cutter carrier axially until it is out of reach of the adaptor and thus at no time causes the "washer" 23 to expand.

The modification shown in Figure 3 ensures that you first expand the "seal" to establish a "grip" contact between the adaptor body and the cutter carrier and then rotate the cutter carrier to move the seal into contact with the end of the neck of the tee. The adaptor is totally divorced from any action to cut an entry into the main. After completion of the air test the adaptor would be totally removed and normal procedures and methods would be employed to effect connection to the main. That the cutter carrier is a cutter carrier is superfluous to the use it is put to for purposes of fitting the pressure test adaptor being the subject of this invention.

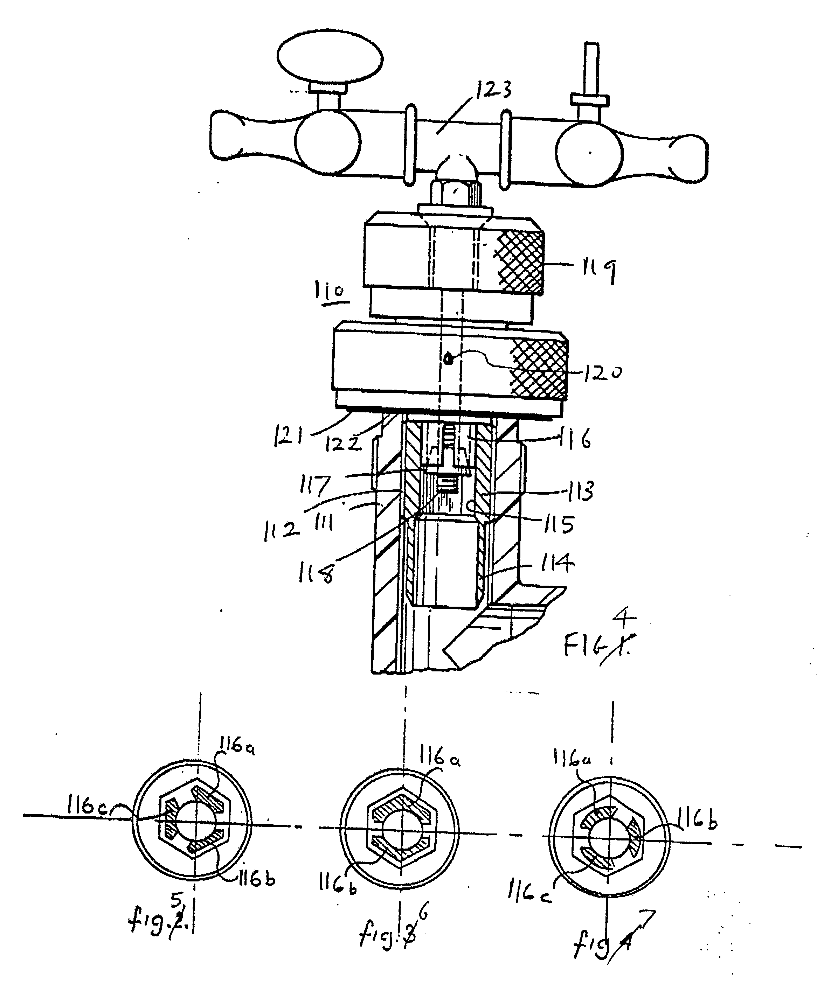

The tapping tee 110 shown in Figure 4 is attached to a gas main by being "electro-fused". Both the tapping tee 110 and the gas main are of plastics material and a heater wire in the tapping tee is heated, in a well known manner to effect the welding or fusing of the tee to the main.

The tapping tee has a neck portion 111, with an internal thread 112 into which is screwed a cutter 114. The cutter 114 is formed at its upper end as a female hexagon 115. This cutter is used, in due course to cut a hole in the main as illustrated in Figure 1.

The adaptor for enabling a pressure test kit to be attached to the neck of the tapping tee is also shown in Figure 4.

The adaptor comprises a round body 119 which may be made of plastic or metal and which has a bore 120 extending axially through it.

The adaptor is attached to the tee by use of gripping means consisting of a split sleeve or collet 116, which is split into three parts 116a, b and c as shown in Figure 5, and an internal cone nut 117 threaded on a bolt 118 which extends to and is rotatable by an upper portion 119 of the adaptor. Collet 116 is attached to a lower part 120 of the adaptor, the parts 119 and 120 being independently rotatable.

On the lower face of the part 120 is an annular sealing washer 121 intended to engage and seal the upper end 122 of the neck portion 111.

To attach the adaptor to the tapping tee it is placed on the neck of the tee with the collet 116 inserted into the hexagon nut within the tee.

Part 120 of the adaptor is held stationary while part 119 is rotated so as to rotate the bolt 118 which will cause the cone nut 117 to enter the split sleeve or collet 116 thus forcing the parts 116a, 116b and 116c radially outwardly so as to grip the internal surfaces of the female hexagon 115 within the cutter 114.

When the grip has been firmly established the cutter 114 may be rotated within the upper part of the tee by rotating the lower portion 120 of the adaptor and this will cause the cutter 114 to move axially downwardly in the neck of the tee thus compressing the seal 121 against the upper portion 122 of the neck of the tee.

Pressure tests may now be carried out using conventional pressure test apparatus part of which is shown at 123.

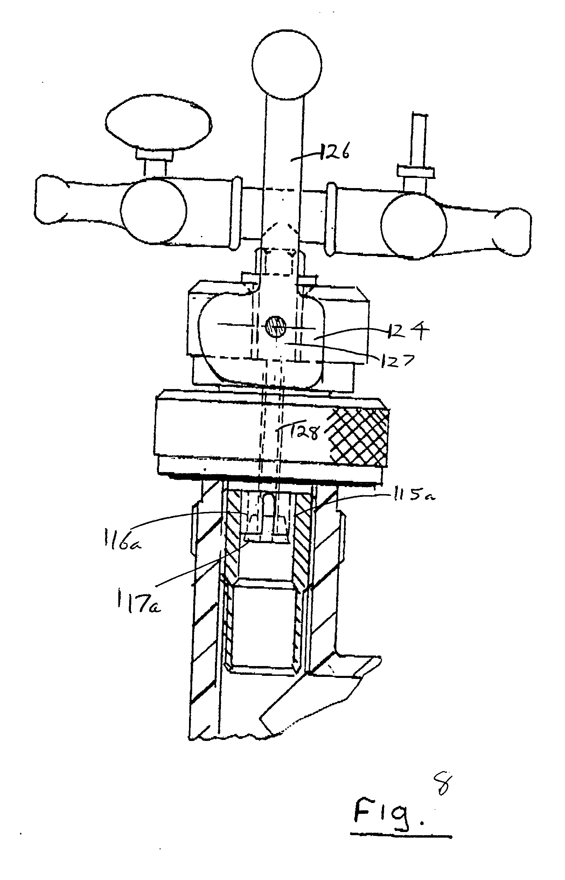

Figures 6 and 7 show alternative forms of the collet arrangement. In Figure 6 is shown a two part collet 116a, 116b in which each part is, in section, substantially semi-hexagonal. In Figure 7 each of the three parts of the collet, 116a, b and c is of curved external surface. Figure 8 shows an alternative method for drawing the cone nut into the collet arrangement, actuated by a cam action. In Figure 8 the cone nut 117a may be raised and lowered within the collets by means of a cam 124 pivoted at 125 and rotatable by a lever 126. As lever 126 is rotated anti-clockwise it will draw up the block 127 to which is attached a rod 128 carrying the cone nut 117a. This will cause the cone nut 117a to enter the split collet 116a thus opening up the collet and causing it to grip the internal surface of the female hexagon 115a.

## Claims

1. An adaptor for connecting a pressure testing device to a service tee characterised by a gripping means (22,23; 116,117) adapted to fit into a socket (13';113') in a cutter (13;113) or stopper in the tee neck, the gripping means on the adaptor being adapted to be diametrically expandable so as to grip the socket internally to enable the adaptor to be moved axially in conjunction with and in response to movement of the cutter or stopper axially, the axial movement of the cutter itself being induced by rotation of the adaptor, and a seal (25) on the adaptor adapted to be moved axially into contact with and to seal the end face of the tee neck, the seal being adapted to be brought into close contact with the end face of the tee by the axial movement of the adaptor and cutter or stopper, and means (26,27) on the adaptor to receive a pressure test kit fitting (123).

2. An adaptor according to claim 1 and characterised in that the gripping means comprises a split sleeve, or collet (116), and an internal cone nut (117), and means (118;124,126) to draw or push the cone nut in to the split sleeve so that as the cone nut (117) enters the split sleeve (116) the split portions of the sleeve expand to grip the cutter carrier internally.

3. An adaptor according to claim 2 and in which said means is a thread or toggle clamp or cam arrangement.

4. An adaptor for connecting a pressure testing device to a service tee, such as a tapping tee, characterised by a male hexagon nut (22) adapted to fit into a corresponding hexagonal socket (13') in a cutter carrier (13) in the tee neck, a resilient washer (23) on the adaptor adapted to be diametrically expandable so as to grip the cutter carrier internally to enable the adaptor to be moved axially in conjunction with and in response to movement of the cutter carrier axially, the axial movement of the carrier itself being induced by rotation of the adaptor, and a seal (24) on the adaptor adapted to be moved axially into contact with and to seal the end face of the tee neck (10'), and means on the adaptor (27) to receive a pressure test kit fitting (36), the seal being adapted to be brought into close contact with the end face of the tee by the axial movement of the adaptor and cutter carrier.

5. An adaptor according to claim 4 and characterised in that said male hexagon nut (22) is carried on a threaded extension (20) which passes through the body of the adaptor, and is axially movable by rotation of a captive nut (35) so that the washer is caused to grip the cutter carrier by rotating the captive nut (35) to move the threaded extension axially, and thus compress the resilient washer, which is located around the threaded extension.

6. An adaptor according to claim 4 or claim 5 and characterised in that the seal comprises an annular resilient washer (24) adapted to contact and seal against the end face (25) of the neck of the service tee, the seal being effected again by rotation of the body of the adaptor thus rotating and moving the cutter carrier axially after the resilient washer has been compressed to grip the cutter carrier.

0300795

Fig. 1

0300795

Fig. 2

Fig. 3

0300795

110

119

120

121 122

117

112 111

118

116

113

115

114

123

FIG. 4

116a
116c
116b
fig. 5

116a
116b
fig. 6

116a
116b
116c
fig. 7

0300795

Fig. 8

| | DOCUMENTS CONSIDERED TO BE RELEVANT | | EP 88306715.9 |
|---|---|---|---|
| Category | Citation of document with indication, where appropriate, of relevant passages | Relevant to claim | CLASSIFICATION OF THE APPLICATION (Int. Cl.4) |
| A | DD - A1 - 241 645 (VEB SCHALT-GERÄTEWERK) <br> * Totality * <br> -- | | F 16 L 41/04 <br> G 01 M 3/02 |
| A | GB - A - 1 207 090 (ROHRER) <br> * Fig.; claims * <br> ---- | | |

**TECHNICAL FIELDS SEARCHED (Int. Cl.4)**

F 16 L 41/00

G 01 M 3/00

The present search report has been drawn up for all claims

| Place of search | Date of completion of the search | Examiner |
|---|---|---|
| VIENNA | 08-11-1988 | BURGHARDT |